# EUROPEAN PATENT APPLICATION

(11) **EP 1 715 475 A1**
(43) Date of publication of application: **25.10.2006**
(21) Application number: 06252131.5
(22) Date of filing: 19.04.2006
(51) Int. Cl.: G10L 15/26

(54) **Conversation aid-device**

(30) Priority: 20.04.2005 JP 2005122824; 20.04.2005 JP 2005122825
(71) Applicant: Sony Computer Entertainment Inc., Tokyo (JP)
(72) Inventor: Yamamoto, Yoshiteru, c/o Sony Computer, Minato-ku Tokyo (JP)
(74) Representative: Turner, James Arthur

(57) **Abstract**

There is provided a conversation aid device that can improve usefulness in foreign language conversations etc.

The conversation aid device accessibly connects to a data base storing response sentence table correlating uttered sentence identification information for identifying uttered sentences with a reply sentence list enumerated as assumed responses to the uttered sentences, acquires a reply sentence list, correlated to spoken sentence identification information of the input spoken sentences, displays a list of reply sentences contained in the reply sentence list, and causes a respondent to selectively read aloud.

## Description

The present invention relates to a conversation aid device, for example for helping with a conversation between a person asking questions and a person answering those questions.

These days, the consolidation of transportation networks is very advanced, and it is easy to make a trip to a foreign country, and there has also mean a large increase in meetings where conversations take place with people from various countries. Under current circumstances, there is also a large increase in the variety of foreign languages used in conversation, and there has been demand for a device to aid in these foreign language conversations.

An electronic dictionary that poses foreign language questions in order to assist in the learning of a foreign language is disclosed in Japanese patent laid open No. 2004-294993. There have also been advances in technology known as machine translation, for grammatically analyzing a sentence.

However, with the above-described technologies such as electronic dictionaries and machine translation, they do not necessarily provide efficient assistance to conversation. For example, with an electronic dictionary, it is useful in cases where there are unknown words in the content that will be discussed, but it is of not use when putting sentences together in a conversation. Also, in cases where there are unknown words to be spoken to another person, if the spelling of that word is unknown, it is not possible to convey the meaning. In the case of machine translation, it is possible to put sentences together as a conversation, but in cases where content spoken by another person cannot be understood there is a problem that it cannot be machine translated.

In this way, with the electronic dictionary technology and machine translation technology of the related art, there are problems in that the usefulness in foreign language conversations, for example, cannot be said to be high. Also, this situation is not limited to foreign language conversations.

Various respective aspects and features of the invention are defined in the appended claims. Features from the dependent claims may be combined with features of the independent claims as appropriate and not merely as explicitly set out in the claims.

The present invention has been conceived in view of the above situation, and embodiments of the present invention can provide a conversation aid device capable of improving usefulness in foreign language conversations, for example.

In order to solve or at least alleviate the above described problems of the related art, embodiments of the present invention provide a conversation aid device accessibly connecting to a data base storing response sentence table correlating spoken sentence identification information for identifying spoken sentences with a reply sentence list enumerated as assumed responses to the spoken sentences, containing a reply sentence acquisition section for acquiring the reply sentence list, correlated to the spoken sentence identification information of input spoken sentences, and a reply sentence display section for displaying a list of reply sentences contained in the reply sentence list.

The invention will now be described by way of example with reference to the accompanying drawings, throughout which like parts are referred to by like references, and in which:
Fig. 1 is a structural block diagram showing an example of a conversation aid device of an embodiment of the present invention.
Fig. 2 is explanatory diagram showing an example of an spoken sentence database of an embodiment of the present invention.
Fig. 3 is explanatory diagram showing an example of reply sentence database of an embodiment of the present invention.
Fig. 4 is explanatory diagram showing an example of reply sentence table of an embodiment of the present invention.
Fig. 5 is explanatory diagram showing an example of an assigned word list of an embodiment of the present invention.
Fig. 6 is a functional block diagram showing an example of a conversation aid device of an embodiment of the present invention.
Fig. 7 is explanatory diagram showing an example of counter sentence table of an embodiment of the present invention.
Fig. 8 is explanatory diagram showing an example of a list of emphasis words of an embodiment of the present invention.
Fig. 9 is explanatory diagram showing another example of a list of emphasis words of an embodiment of the present invention.
Fig. 10 is explanatory diagram showing an example screen of a conversation aid device of an embodiment of the present invention.
Fig. 11 is explanatory diagram showing an example screen of a conversation aid device of an embodiment of the present invention.
Fig. 12 is explanatory diagram showing an example screen of a conversation aid device of an embodiment of the present invention.
Fig. 13 is explanatory diagram showing an example of an instruction table of the present invention.

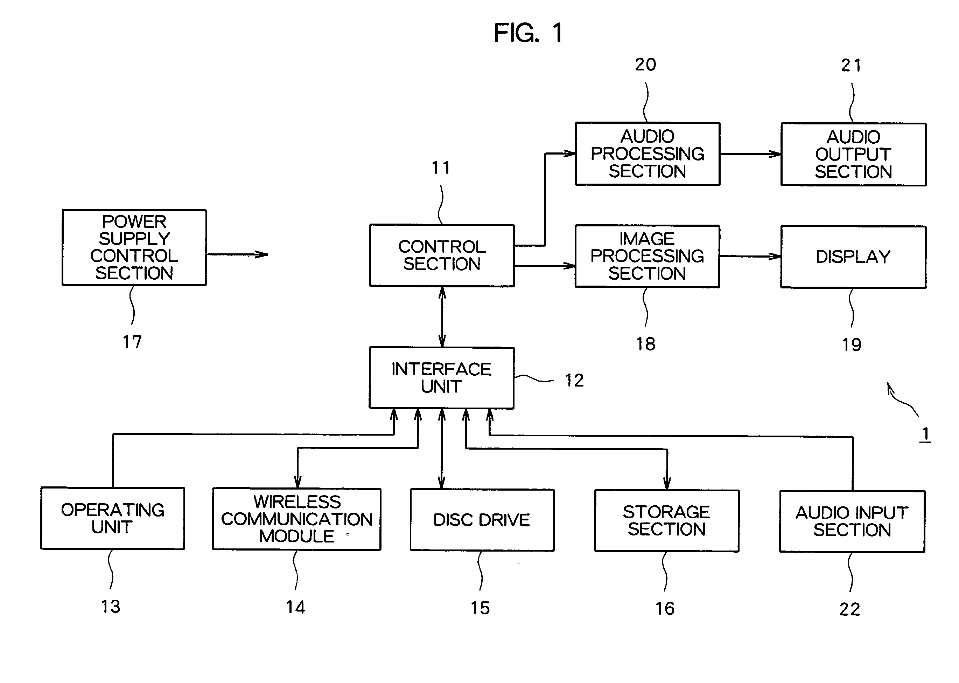

An embodiment of the present invention will be described with reference to the drawings. A conversation aid device of an embodiment of the present invention can be realized using for example, a portable game machine. As shown in Fig. 1, this portable game machine comprises a control section 11, an interface unit 12, an operation unit 13, a wireless communication module 14, a disk drive 15, a storage section 16, a power supply control section 17, an image processing section 18, a display 19, a voice processing unit 20, a voice output section 21, and a voice input section 22.

Here, the operating unit 13, wireless communication module 14, disc drive 15, storage section 16 and voice input section 22 are connected to the control section 11 via the interface unit 12. Also, the power supply control section 17, image processing unit 18 and voice processing unit 20 are connected to the control section 11, and the display 19 is further connected to the image processing unit 18. The voice output section 21 is also connected to the voice processing unit 20.

The control section 11 is an MPU (Micro Processing Unit) etc., and operates in accordance with a program stored in a computer readable external storage medium M inserted into the disc drive 15, or in the storage section 16. With this embodiment, a program for realizing a conversation aid device using this portable game machine is supplied stored in the external storage medium M, and the control section 11 reads out the program from the external storage medium M and executes the program.

A database used in processing as the conversation aid device is also stored in the external storage medium M. The processing content of the control section 11 and the content of the database will be described in detail later.

The interface unit 12 distributes and outputs signals output by the control section 11 to either of the wireless communication module 14, disc drive 15 and storage section 16 according to instructions input from the control section 11. Also, the interface unit 12 respectively arbitrates signals from the operating unit 13, wireless communication module 14, disc drive 15 and storage section 16 and voice input section 22 to the control section 11, and outputs them to the control section 11.

The operating unit 13 includes game operation buttons and setting buttons. By operating each of the various buttons etc. contained in the operating unit 13, player and game operations are performed. The operating unit 13 outputs signals representing contents of player operations to the interface unit 12.

The wireless operating module 14 is a wireless communication device conforming to, for example, 802.11b or 802.11g, and transmits data constituting object of transmission by wireless emission in accordance with instructions input from the control section 11. Signals reaching an antenna (not shown) are also received and output to the control section 11.

The disc drive 15 reads out data from an inserted external storage medium M as a result of instruction from the control section 11, and outputs the data to the control section 11. The storage section 16 is a storage element such as RAM or ROM, and can operate as computer readable storage medium for holding a program to be executed by the control section 11, or can operate as a work memory of the control section 11.

The power supply control section 17 supplies power to each section. The image processing unit 18 produces an image to be displayed on the display 19 in accordance with instructions input from the control section 11, and outputs image signals for displaying the produced image to the display 19. The display 19 is a liquid crystal display, for example, and control liquid crystals based on image signals input from the image processing unit 18 to display an image.

The voice processing unit 20 synthesizes voice in accordance with instructions input from the control section 11 and outputs the synthesized voice to a voice output section 21. Here, the voice is, for example, a beep sound or a musical sound, and may also represent various sounds of a person's voice. The voice output section 21 is, for example, a speaker and a headphone terminal, and drives the speaker based on voice signals input from the voice processing unit 20, and outputs the voice signal to the headphone terminal.

The voice input section 22 is a microphone, for example, for converting peripheral sounds to electrical signals and outputting the signals.

### Database Content

With the present embodiment, at least an spoken sentence database, a reply sentence database, a reply sentence table and an assigned word list are stored in the database. Each database is exemplified below.

### (1) spoken sentence database

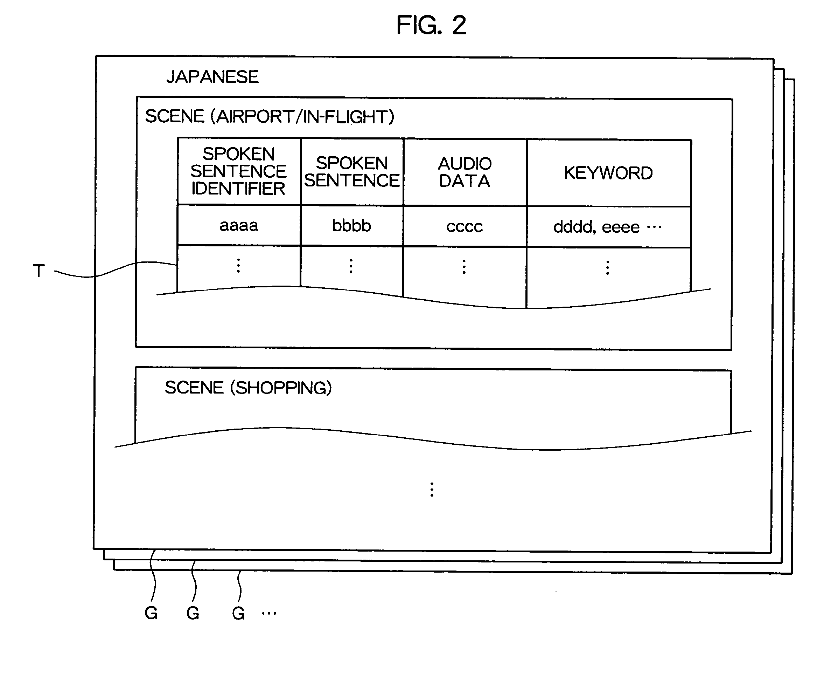

First of all, as shown in Fig. 2, the spoken sentence database contains a spoken sentence entity table group G for respective languages, such as Japanese, English ... The spoken sentence entity group G contains an spoken sentence entity table T for each scene identifier, such as "airport/in-flight", "shopping".

This spoken sentence entity table stores spoken sentence entities audio data and keywords for the spoken sentence identifier in a correlated manner. Here, the spoken sentence entities are text strings describing sentences to actually be spoken, and the audio data is data recording a voice speaking the text strings in the respective foreign languages. This audio data is recorded in various audio data formats such as MP3 and AIFF, for example. Further, keywords are required in cases where there is audio input as the method of receiving spoken sentences, and in cases where there is no audio input this information is not necessary. As a specific example, these keywords are phoneme data as an object of comparison at the time of audio recognition. It is also possible for a keyword to be part of a spoken sentence entity, for example. In other words, if a spoken entity is "When is this store's regular holiday?", keywords include "store", "regular holiday", "when" etc. Further, as keywords it is possible to have words that have a possibility of being spoken in relation to that spoken sentence. For example, if the above sentence "When is this store's regular holiday?" is spoken, it is possible to include keywords that describe synonyms of "regular holiday", such as "holiday", "closed day", etc.

Incidentally, the table T of respective spoken sentence entities stores in advance information relating to spoken sentences it is assumed may be used for each scene identified by the respective scene identifiers.

### (2) Reply Sentence Database

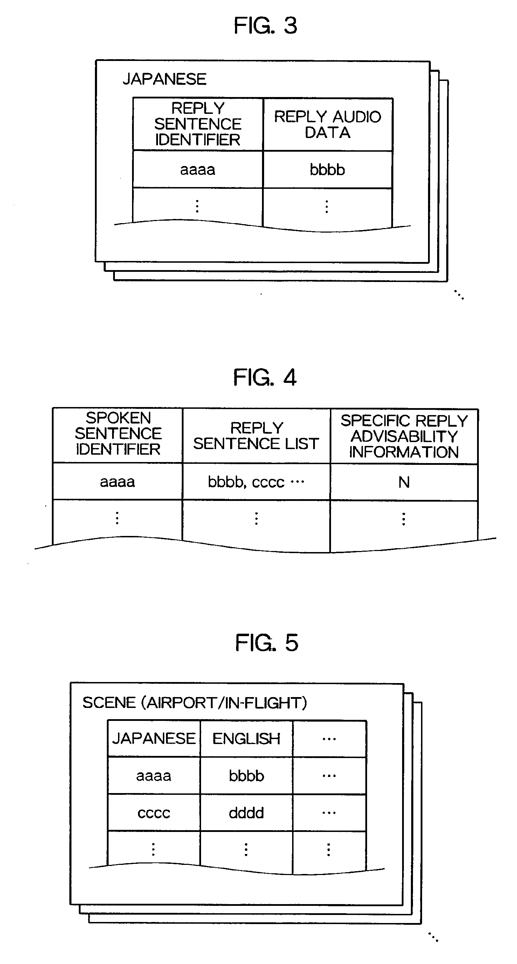

The reply sentence database is similar to the spoken sentence database, and contains a reply sentence entity table for each language, such as Japanese, English, etc. Entities for reply sentences are stored in the reply sentence entity table correlated to reply sentence identifiers. Here, the reply sentence entities are text strings describing sentences to actually be spoken. Also, with this embodiment, it is possible to store a table (reply audio data table) correlating audio data (reply audio data) corresponding to a reply, and an identifier for the reply audio data in the database for each language, such as Japanese, English etc. In this case, it is also possible to correlate identifiers for reply audio data corresponding to respective reply sentence identifiers and include them in the reply sentence entity table (Fig. 3).

### (3) Reply Sentence Table

As shown in Fig. 4, the reply sentence table correlates spoken sentence identifiers, as spoken sentence identification information, a previously enumerated reply sentence list as assumed replies to spoken sentences identified by the spoken sentence identifier, and specific reply advisability information representing advisability of a reply using a word representing affirmative or negative.

As an example, a reply sentence list correlates "Sunday", "We are Always open." etc. to an spoken sentence identifier for the spoken sentence "When is this store's regular holiday?". With this embodiment, as a reply sentence list entities are correlated not to the reply sentence but to a reply sentence identifier.

Further, in "When is this store's regular holiday?" of the above described example, since it is not possible to reply using a word representing affirmative or negative, such as "yes" or "no", which means that information indicating the fact that such as reply is not possible ("N") is correlated as the specific reply advisability information.

For example, as another example, for an spoken sentence identifier for "Can you make it a little cheaper?", being a sentence which can be answered "yes" or "no", a list of reply sentences such as "That's not possible." or "I'll check with the manager." is correlated, and at the same time information indicating the fact that it is possible to reply using a word representing affirmative or negative ("Y") is correlated as the specific reply advisability information.

### (4) Assigned word list

As shown in Fig. 5, for every scene identifier the same as the spoken sentence database, such as "airport/in flight", "shopping" etc., the assigned word list stores a list of words corresponding to things having a possibility of being expressed in each scene by an assigned word. Each word holds an expression in each language as characters strings correlated to each other.

Here, an assigned word is a word substituted by words such as "this" or "that", "it" or "they". An assigned word is also a word expressed as an assigned word. For example in a "hotel" scene, as fixtures within the hotel, items such as "television", "telephone", "internet connection terminal" are expressed using assigned words, and so these words are stored in the assigned word list.

### (5) Database Content

With this embodiment, these databases are stored in an external storage medium M, and can be accessed from the control section 11 via the disk drive 15.

### [Acceptance of spoken sentences]

The conversation aid device of this embodiment establishes a sentence carried on between two people. Generally, a conversation is carried on between someone initiating a conversation (speaker) and someone replying to the conversation initiation (respondent). The speaker in advance performs an assignment operation to select the language they will use themselves and the language used by the respondent. The control section 11 receives the assignment operation and stores information representing speaker side language (question side language information) and information representing respondent side language (reply side language information) in the storage section 16.

The speaker also chooses a usage scene. This selection is selection of any scene corresponding to a scene identifier in the spoken sentence database. The control section 11 specified the scene selected by the speaker, and stores scene identification information in the storage section 16.

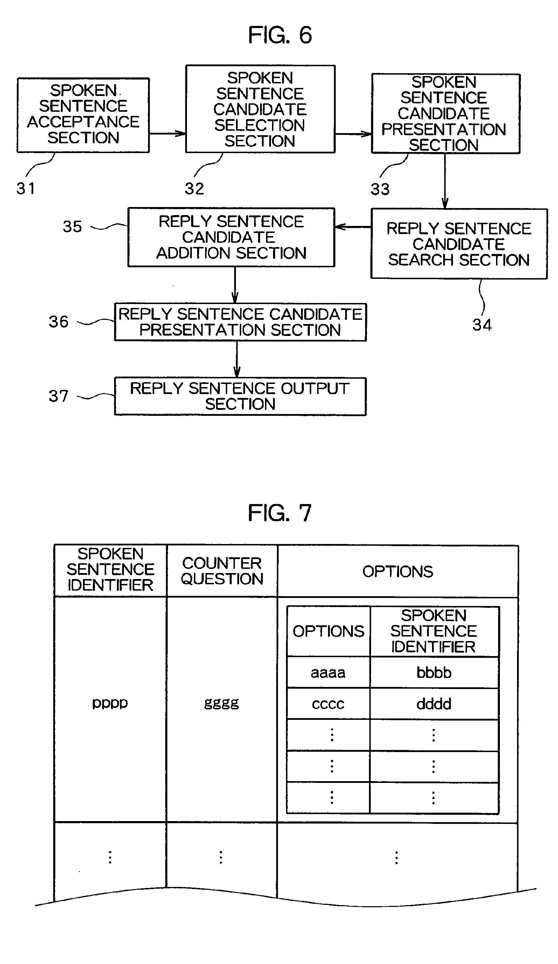

In this embodiment, as shown in Fig. 6, the processing carried out by the control section 11 as a conversation aid device functionally includes an spoken sentence acceptance section 31, an spoken sentence candidate selection section 32, an spoken sentence candidate presentation section 33, a reply sentence candidate search section 34, a reply sentence candidate addition section 35, a reply sentence candidate presentation section 36 and a reply output section 37.

The speaker speaks into the audio input section 22, for example, to input a spoken sentence. If an audio signal is input to the spoken sentence acceptance section 31 from the audio input section 22, it is compared with phonemes relating to keywords stored in the spoken sentence database, to detect keywords contained in the input spoken sentence. This processing can make direct use of general processing for voice recognitions, and so a detailed description will be omitted here.

Incidentally, the spoken sentence acceptance section 31 can also accept input of spoken sentences as text data via the operating unit 13. In this case also, the spoken sentence acceptance section 31 detects keywords contained in spoken sentences input as the text data. This processing is also widely known as processing for searching for matches in text, and so a detailed description will be omitted here.

Then, the spoken sentence candidate selection section 32 receives the detected keywords, and references a spoken sentence entity table corresponding to the selected language (language corresponding to the question side language information) and selected scene to count how many detected keywords there are in correlated keywords for every spoken sentence.

For example, in the case of a question in a conversational tone, such as "When is this store closed?", the control section 11 detects the keywords of "store", "when" and "closed". At this time, for a spoken sentence of "When is this Store's regular holiday?", in the case that keywords such as "store", "regular holiday", "closed", and "when" are correlated, the count will be "3". Also, in the case of having correlated keywords of "store", "Japan", and "have" for a spoken sentence "Does this store have a Japanese branch?", among keywords detected from the above question only the word "store" matches, and so the count is "one". Also, a description has been given here of an example spoken sentence candidates are selected on the basis of a detected keyword count, but it is also possible to set parts that are easy to recognize as a keyword and to select spoken sentence candidates on the basis of whether or not the keyword is detected. Specifically, in this case, for example, keywords such as "bar", "can drink" and "where's the bar" are assigned as keywords corresponding to a spoken sentence such as "Where is the bar?".

The spoken sentence acceptance section 31 accepts input of spoken sentences as text data via the operating unit 13, and detects keywords contained in the spoken sentence input as the text data. Then, the spoken sentence candidate selection section 32 receives the detected keywords, and references a spoken sentence entity table corresponding to the selected language (language corresponding to the question side language information) and selected scene to compare with correlated keywords, and outputs information specifying spoken sentences that match the detected keywords to the spoken sentence candidate presentation section 33.

### [Presentation of Spoken sentence candidates]

Based on information input from the spoken sentence candidate selection section 32, the spoken sentence candidate presentation section 33 selects a spoken sentence, makes the selected spoken sentence a noted sentence and reads out text for the noted sentence from the spoken sentence entity table. The image processing unit 18 is then instructed to display read out text on the display 19.

For example, in the case of the spoken sentence candidate selection section 32 outputting the count number for the keywords, a spoken sentence with the largest count is selected as the noted spoken sentence. In the case of this example, for a question of "When is this store closed?", if the count is made largest for a spoken sentence of "When is this store's regular holiday?" , this spoken sentence "When is this store's regular holiday?" is displayed on the display section 19.

Similarly, in the case of finding a spoken sentence correlated to detected keywords, and outputting information specifying the found spoken sentence, the spoken sentence specified by the information is selected as the noted spoken sentence. With this example, for a question "Is there any place I can drink?", for example, the keyword "can drink" is detected, and a spoken sentence "Where is the bar?" is found, and information specifying the sentence "Where is the bar?" is output. The spoken sentence "Where is the bar?" is also displayed on the display 19.

Also, at this time, the spoken sentence candidate presentation section 33 selects whether or not the selected noted sentence corresponds to the question intended by the speaker. Here, in the event that the speaker has performed an instruction operation to the effect that the intended question is not conveyed, the control section 11 interrupts processing and awaits question input.

On the other hand, if the speaker has performed instruction operation to the effect that the noted sentence conveys their intention, the control section 11 references reply side language information and reads out audio information correlated to the noted sentence in the reply side language. The audio information is then output to the audio processing unit. For example, when "Japanese" is set as the reply side language, Japanese audio corresponding to the spoken sentence "When is this store's regular holiday?" is reproduced, and output via the speakers.

### [Processing relating to assigned words]

When predetermined assigned words such as "this" or "these", "that" or "those", or "it" or "they" are contained in keywords detected by the spoken sentence acceptance section 31, the spoken sentence candidate presentation section 33 can execute processing relating to these assigned words.

These assigned words are also set in advance in each of the foreign languages. With this processing, when predetermined assigned words are contained in the detected keywords, the spoken sentence candidate presentation section 33 displays a list of assigned words corresponding to a scene identifier of a selected scene on the display section 19. This processing can also be executed after the user performed an instruction operation to the effect that the noted spoken sentence conveys their intended meaning.

If a specific example is considered, when a user selected "hotel" as a scene, for example, if a question "Do you have this?" is input "this" and "have" are respectively detected as keywords, and a spoken sentence such as "Do you have this?" is selected as a noted spoken sentence.

At this time, the spoken sentence candidate presentation section 33 displays a list of words being stored in the database as an assigned word list corresponding to the scene identifier for "hotel" on the display 19. In this way, a list such as "television", "telephone", "internet connection terminal" etc. is presented on the display 19 as fixtures inside a hotel. The speaker performs an instruction operation to select one from this list.

In this case, the control section 11 references reply side language information and reads out audio information correlated to the noted sentence in the reply side language. The audio information is then output to the audio processing unit 20, and a word, from among the selected assigned words, corresponding to the reply side language, is displayed on the display 19.

For example, with the above described example of in a hotel, if the user selects "television", audio of the reply side language corresponding to the spoken sentence "Do you have this?" is emitted from the speaker, and a word corresponding to "television" is displayed on the display in the reply side language.

### [plurality of candidates]

Further, when there are a plurality of candidates for spoken sentences to be selected, such as spoken sentences with a maximum count and spoken candidates that match detected keywords, the spoken sentence candidate presentation section 33 can present a list of the plurality of candidate spoken sentences, and allow the user to select.

Further, for a plurality of spoken sentences for which simultaneous selection is likely in selection based on these type of keywords (hereafter referred to as an analogous spoken sentence group), it is also possible to correlate a group identifier inherent to each analogous spoken sentence group in spoken sentence entity table of the database in advance.

For example, in a scene of "airport/in-flight", for example, with three spoken sentences of "I would like to change to an aisle seat.", "I would like to change to a window seat." and "I would like to change to another vacant seat.", they all correlate to the keywords "seat" and "change", and so it is likely that the count relating to detected keywords will become the same. These sentences are therefore respectively correlated to a common group identifier.

Also, a table correlating spoken sentence identifiers for each option with counter questions and options in each foreign language (counter question sentence table) is stored in the database for each group identifier. (Fig.7)

If there are numerous sentences with a maximum count, the spoken sentence candidate presentation section 33 then references the group identifier correlated to each spoken sentence and checks whether or not they are common. If there is commonality, the spoken sentence candidate presentation section 33 selectively reads out from counter question sentences and options stored in the counter question sentence table and correlated to the group identifier those corresponding to the speaker side language, displays the counter question sentence on the display 19, and/or outputs audio for the counter question sentence to the audio processing section 20 to emit sound. Also, the options are displayed on the display 19 allowing the speaker to select.

For example, if the speaker inputs a question by saying "I would like to change seats.", the keywords "seat" and "change" are detected. A count for these detected keywords is then made a maximum of "two" in all three of the spoken sentences "I would like to change to an aisle seat.", "I would like to change to a window seat." and "I would like to change to another vacant seat.", as in the above described example.

Because the group identifiers correlated these spoken sentences are the same (common), the spoken sentence candidate presentation section 33 reads out counter questions and options that are correlated to this group identifier. At this time, of the speaker side language is Japanese, Japanese counter questions and options are read out.

For example, this counter question is composed in advance in line with the spoken sentence candidates, such as "Which seat would you like?". Also, in accordance with the above-mentioned three questions, respective options are displayed such as "aisle seat", "window seat" and "another vacant seat". If the speaker carries out an instruction operation to select one from among these options, the spoken sentence presentation section 33 reads out a spoken sentence identifier registered in correspondence with the selected option.

Also, the spoken sentence candidate presentation section 33 references reply side language information to correlate to the read out spoken sentence identifier and read out audio information corresponding to the reply side language. The audio information is then output to the audio processing unit.

When the speaker selects "aisle seat" from the options in this way, for example, audio information corresponding to the spoken sentence "I would like to change to an aisle seat." is emitted.

### [Emotional Level expression]

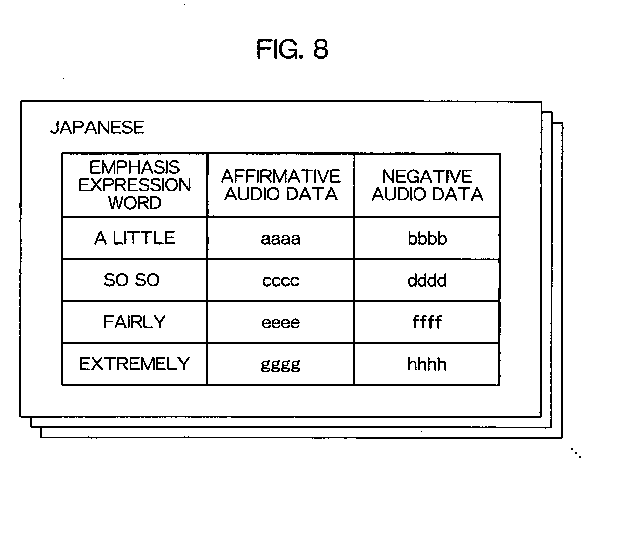

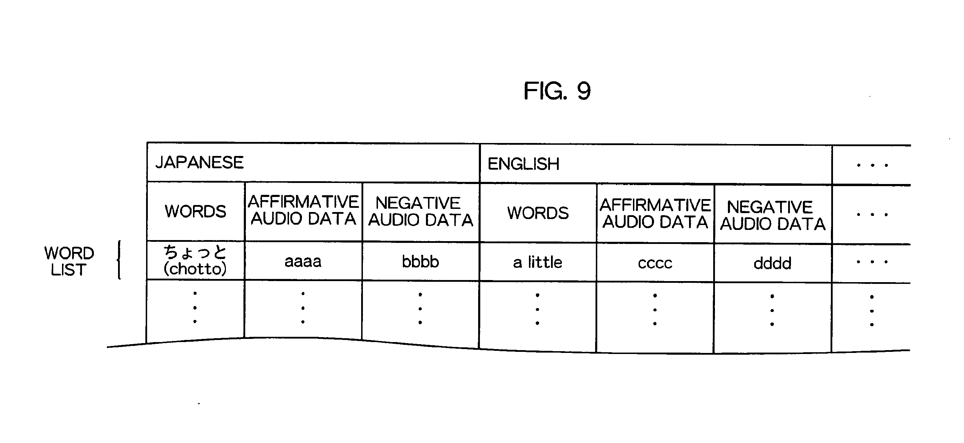

The spoken sentence candidate presentation section 33 can also append a expression for further emphasizing the spoken sentence by order of the speaker. In this case, as an emphasis expression word list, words of emphasizing expressions in each foreign language and corresponding audio data are stored in the database stored in the external storage medium M in a correlated manner (Fig. 8), or word sets in each language respectively correlating emphasizing expressions with the same meaning are respectively stored correlated to corresponding audio data (Fig. 9). Incidentally, a plurality of language sets are stored according to degree of emphasis.

Further, even for words that have the same meaning, such as "extremely" audio representation will be different for cases where expression is cheerful or positive, such as "extremely tasty", and for cases (physically etc.) where expression is gloomy or negative, such as "extremely bad". With the emphasizing expression word list, as shown for example in Fig. 9, audio data for a positive case and audio data for a negative case are correlated as audio data respectively corresponding to words of emphasizing expressions for each language. For example, as words of emphasizing expressions, as shown in Fig. 8 etc., there are "a little", "so so", "quite", and "extremely" etc.

The spoken sentence candidate presentation section 33 allows selection of these emphasizing expressions in a screen allowing input of whether or not a noted sentence is desirable. In the event that the user does not select an emphasizing expression, operations that have already been described are carried out. Also, when selecting an emphasizing expression, first of all positive or negative is selected, and a list of words of emphasizing expressions stored in the data base is presented, and selection of which expression is to be used is carried out.

For example, when a noted sentence is "This is tasty." the user selects positive and "extremely". In this case, audio data corresponding to a word in the respondent language us acquired and presented from a word set containing "extremely" in the speaker side language.

In this way, together with speaking the sentence in the respondent side language corresponding to "This is tasty.", audio is generated based on audio data for a respondent side language corresponding to "extremely".

Incidentally, in the spoken language table, a flag representing whether or not this type of emphasizing expression is possible is associated with each spoken sentence, and it is possible to only carry out the above described processing in cases where a spoken sentence that is associated with a flag indicating that emphasizing expression is possible is made a noted sentence.

Also, in a spoken sentence such as "Do you have a television?", by inputting the emphasizing expression "extremely!" the sentence becomes a comical sentence such as "Do you have a television? Extremely! " and it is possible to introduce a better atmosphere between the two people conversing, which means that regardless of whether or not ungrammatically or semantically it is possible to have an emphasizing expression, it is possible to make the words of the emphasizing expressions selectable.

Further, a description has been given here of an example where sound is generated using audio data, but it is also possible to display text of spoken sentences and text of selected emphasizing expression on the display 19 in the respondent side language. It is also possible to carry out different representation for cases where the selected emphasizing expression is positive or negative. For example, in the case of a positive emphasizing expression, it is possible to render the text of the emphasizing expression in red, and render in blue in the case of a negative expression. Also, using a character capable of being drawn with an expression, such as a person or an animal, in the case of a positive expression and the case of a negative expression, it is possible to additionally show a character having facial expression for respectively corresponding expressions that have been set in advance.

### [Presentation of Reply Sentences]

If the spoken sentence candidate presentation section 33 has completed processing such as outputting audio information corresponding to the spoken sentences, processing of the reply sentence candidate search section 34 commences.

The reply sentence candidate search section 34 received input of a spoken sentence identifier for a spoken sentence emitted in the spoken sentence candidate presentation section 33. Then, referring to the database, the reply sentence candidate search section 34 acquires a reply sentence list which correlates to the inputted spoken sentence identifier, and corresponds to the respondent side language from reply sentence lists stored in the reply sentence table.

The reply sentence candidate addition section 35 receives input of a spoken sentence identifier for a spoken sentence emitted in the spoken sentence candidate presentation section 33, and references the database to acquire specific response advisability information correlated to the spoken sentence identifier. Then, in the event that the specific response advisability information is information indicating that a response is possible using words representing positive or negative ("Y"), words representing positive and negative are added to the reply sentence list acquired by the reply sentence candidate search section 34 in the respondent side language, and output. Here, as words representing positive and negative, in English, for example, there are the words "Yes" and "No".

Also, in the event that the acquired specific response advisability information is information indicating that a response is not possible using words representing positive or negative ("N"), the reply sentence candidate addition section 35 directly outputs the reply sentence list acquired by the reply sentence candidate search section 34.

The reply sentence candidate presentation section 36 acquires text for the reply sentences from the reply sentence database based on a reply sentence list output by the reply sentence candidate addition section 35, and displays the text of the reply sentences on the display 19.

The respondent then selects one reply sentence from the text of the reply sentences displayed on the display 19 and speaks. At this time, it is possible for an instruction operation for selecting one reply sentence to be executed, a reply output section 37 to then read out reply audio data corresponding to the speaker side language from reply audio data corresponding to the selected reply sentence and output to the audio processing unit 20, and to emit audio based on the reply sentence audio data by means of the speaker.

It is also possible for the respondent to read aloud one reply sentence into the audio input section 22, and for the control section 11 to determined what reply sentence was input as audio and then display the result of determination on the display 19. For audio recognition in this case also, it is possible to correlate audio recognition keywords for every reply sentence, and determining that a sentence with the most correlated keywords contained in the input audio from displayed candidate reply sentences was read aloud.

### [Operation]

The conversation aid device of the embodiment of the operation has the above described structure, and operates as follows. Here, for example, description will be given assuming a case where a speaker having Japanese as their native language is conversing with a respondent having English as their native language. The speaker operates the conversation aid device to set the speaker side language to Japanese and the respondent side language to English. A scene is also selected according to the place where the device is being used. Here, for example, "restaurant" is selected as a scene.

When the speaker wishes to know which of a number of items described on a menu are a restaurant's "recommendations", they speak "o-susume wo oshiete kudasai" (What do you recommend?) into the audio input section 22 of the conversation aid device. Here, the conversation aid device of the embodiment does not select the whole of the input spoken sentence, but selects the most plausible sentence from among sets of predetermined spoken sentences using keywords contained in the spoken sentence, and it is not necessary to input exactly the same sentence as is stored in the database. For example, it is possible for the conversation aid device itself to act like an interpreter, and to perform input with an imperative expression in the speaker side language (Japanese), such as "o-susume-ga-naika-kiitekure" which means in English, "Would you like to ask what they recommend?".

The conversation aid device detects keywords from input information. Here, "recommend" is detected from the predetermined keyword list, and spoken sentences that are correlated to the detected keywords are searched from the list of spoken words corresponding to the scene "restaurant". Here, a spoken sentence "Do you have any recommendations?" is found.

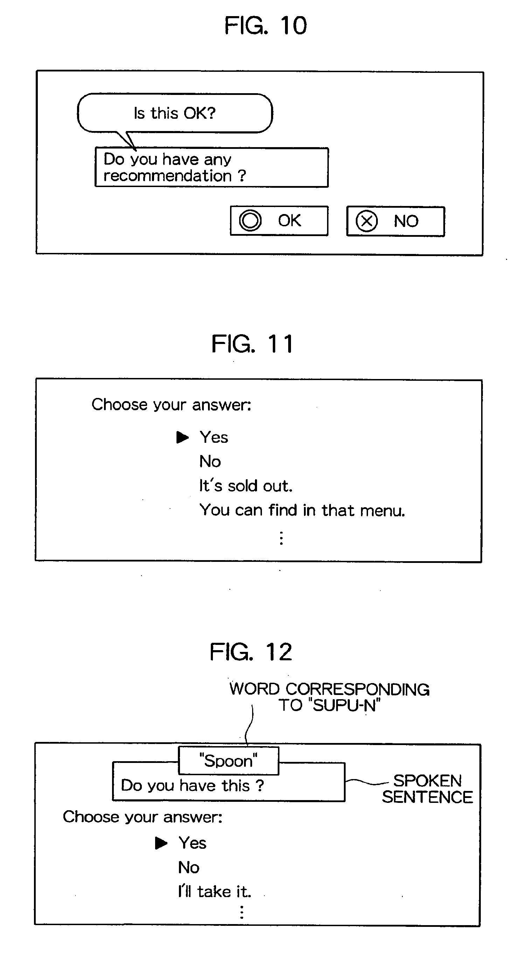

The conversation aid device displays the result of this search, and performs a display enquiring of the speaker whether or not there is desirable content (Fig. 10). If the speaker confirms that there is a desirable sentence, an instruction operation to that effect is performed, and the conversation aid device reads out audio data correlated to that spoken sentence in the respondent side language (English), and emits audio based on the audio data. In this case, it is also possible to display a sentence corresponding to the spoken sentence in the respondent side language on the display 19. It is also possible to carry out a similar display in the case where words for emphasis are selected.

Also, the conversation aid device reads out a reply sentence list in the respondent side language that is stored correlated to the identifier for the spoken sentence. Here, for a question " o-susume arimasuka" (Do you have any recommendations?), since there is the possibility of response with positive and negative words such as "Yes" and "No", presentation is with words in the respondent side language (English) corresponding to "yes" and "no" added to the stored reply sentence list.

In this way, together with indication in the respondent side language, which is English, of the fact that a reply should be selected, such as "Please choose a reply from the following.", reply options such as "yes", "no", "It is sold out.", "You can find it on the menu" etc. are displayed (Fig. 11).

A reply side user selects a reply sentence from these choices and reads it aloud.

Also, in the case where the speaker has need of a spoon while eating, if a spoken sentence such as "kore, arukana?", which means "Do you have this?" in English is input in the speaker side language, the conversation aid device detects keywords such as "kore", which means "this" and "aru", which in this context means "have", from the input spoken sentence. The spoken sentence in the speaker side language having the most detected keywords correlated, "kore wa arimasuka?", which means "do you have this?" is found, and the speaker is asked whether or not this is desirable content. If the speaker confirms that the content is desirable and performs an instruction operation to this effect, the conversation aid device detects that an assigned word "kore", which means "this" is included in the detected keyword, display a list of assigned words for the speaker side language correlated to the scene "restaurant", and the speaker is prompted to make a selection. The speaker selects a desired word, "supu-n", which means "spoon", from the list. If this is done, the conversation aid device reads out audio data in the speaker side language "English", correlated to the spoken sentence, and together with emitting audio based on the audio data, text in English, which is the reply side language, and corresponding to "supu-n" selected from the assigned word list is displayed on the display 19. Here, a state is shown where a sentence in English, "Do you have this?" corresponding to the spoken sentence is also displayed.

The respondent understands the content of speech from words displayed on the display 19 and spoken audio.

Also, the conversation aid device reads out a reply sentence list in the respondent side language that is stored correlated to the identifier for the spoken sentence. For the above described question, since there is the possibility of response with positive and negative words such as "Yes" and "No", presentation is with words in the respondent side language (English) corresponding to "yes" and "no" added to the stored reply sentence list.

In this way, for example, together with indication in the respondent side language, which is English, of the fact that a reply should be selected, such as "kotae wo tsugi kara erande kudasai.", which means "Choose your answer from the following.", reply options such as "yes", "no", "ima, mottekimasu.", which means "I will get one for you." are displayed.

A reply side user selectively reads aloud a reply sentence from these choices. The conversation aid device 11 performs voice recognition on the read aloud content, and displays which sentence has been selected on the display 19. In the following, text and audio for the corresponding speaker side language are presented, and in this way a conversation is established between the speaker and the respondent by means of the conversation aid device.

### [Instruction to Interested Party]

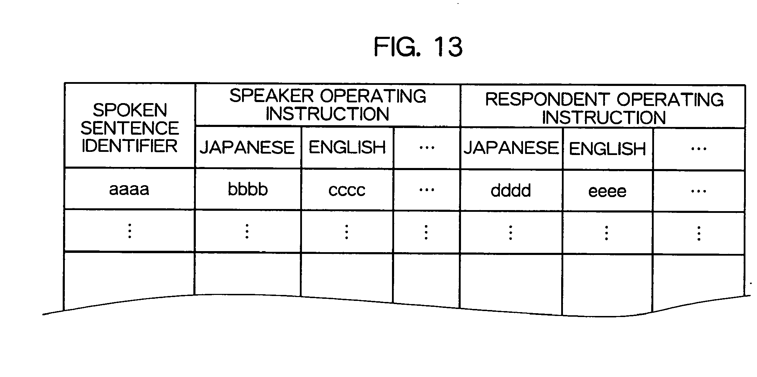

Further, the conversation aid device 11 of this embodiment can also require specified operations to be performed by the speaker and the respondent, relating to spoken sentences presented by the spoken sentence candidate presentation section 33. In this case, an instruction table as shown in Fig. 13 correlating spoken sentence identifiers, operating instructions to the speaker side in the respective languages, and operating instructions to the respondent side in the respective languages, is also held in the database stored in the external storage medium M.

The control section 11 then checks whether or not operating instructions correlated to the spoken sentence identifier for the noted spoken sentence is stored in the instruction table, when an instruction operation is carried indicating that the noted sentence presented by the spoken sentence candidate presentation section 33 is one desired by the speaker.

Here, in the event that operating instructions are stored in the instruction table, the control section 11 reads out the operating instruction to the speaker side in the set speaker side language, and displays on the display 19. Also, when a reply sentence list, relating to the spoken sentence, is being displayed on the display 19, the control section 11 reads out, from operating instructions to the respondent side that are correlated to the spoken sentence identifier of the spoken sentence, those in the respondent side language and collectively displays them.

For example, in the scene "restaurant" as in the above described example, for a spoken sentence such as " o-susume wa dore desuka?" (Which would you recommend?), operating instructions such as "menyu wo shimeshite kudasai." (Please show the menu.) are correlated as operating instructions to the speaker side in the language in the instruction table. Also, as operating instructions to the respondent side, operating instructions such as "menyu de shimeshite kudasai. (Please point out on the menu)" are correlated.

In this way, when the spoken sentence has been selected, for example, "menyu-wo shimeshite kudasai.", which means "Please show the menu." is displayed at the speaker side in the speaker side language, the speaker shows a menu is shown in accordance with the operating instructions, and at the respondent side operating instructions of "menyu wo shimeshite kudasai. (Please show the menu.)" are referenced in the respondent side language and it becomes possible to carry on a conversation by selectively reading aloud reply sentences such as "kore desu" (This one.) as reply sentences, for example, while looking at the menu.

### [Download]

Further, the content of the database of this embodiment can be downloaded from a server on a network, via a wireless communication module 14, for example. As a specific example, for example, if an assigned word list can be downloaded, it becomes possible to include not only words corresponding to the scene, but also words corresponding to an era etc.

According to this embodiment, reply sentences are presented as a list, and a conversation is established by selectively reading aloud to another person, which means that it is possible to avoid situations where the other person can not be heard, can not be understood, etc. Also, since reference terms are detected, and a assigned word list is presented and selected, it is possible to establish a conversation using reference terms in combination with the assigned word list, and it is not necessary to include representation for every single noun in the database. In this way, it becomes possible to reduce the size of the database. In this manner it is possible to improve the usefulness of the conversation aid device of this embodiment.

While the present invention is described in terms of the preferred embodiments or exemplary embodiments, it is not limited thereto.

## Claims

1. A conversation aid device, comprising:
a reply sentence acquisition sections, for accessing a data base storing a response sentence table correlating spoken sentence identification information for identifying spoken sentences with a reply sentence list enumerated as assumed responses to the spoken sentences, and acquiring the reply sentence list, correlated to the spoken sentence identification information of input spoken sentences; and
a reply sentence display section for displaying a list of reply sentences contained in the reply sentence list.

2. The conversation aid device as disclosed in claim 1, wherein specific reply advisability information representing advisability of a reply using words representing positive or negative correlated to spoken sentence identification information is also stored in the reply sentence table, and further comprising a reply sentence addition section for referencing the specific reply advisability information correlated to the question identification information for the input spoken sentence, and if a reply using words representing positive or negative is possible adding positive or negative words to the acquired reply sentence list.

3. The conversation aid device as disclosed in claim 1, wherein the database stores an instruction table that correlates instructions to a speaker side and instructions to a respondent side for spoken sentence identification information identifying a spoken sentence, and further comprising an instruction presentation section for presenting instructions to a speaker side, and presenting instructions to a respondent side, correlated to question identification information for input spoken sentences .

4. The conversation aid device as disclosed in claim 1, wherein the database stores an assigned word list corresponding to reference terms and further comprising a list display section for presenting the assigned word list and presenting to a question side user when assigned words are included in the input spoken sentence.

5. A conversation aid device, comprising:
a spoken sentence presentation section for selectively presenting one from among a predetermined plurality of spoken sentences; and
an emphasis word presentation section for accessing a database storing a plurality of sets of words sets having emphasis representation words correlated to each other in a plurality of languages as an emphasis representation word list, presenting a list of emphasis representation words in a specified language from the emphasis representation word list, specifying a word set containing selected words from the presented list, and taking out words of another specified language, included in the specified word set, and presenting them.

6. A computer readable storage medium storing a program for accessing a data base storing a reply sentence table correlating spoken sentence identification information for identifying spoken sentences with a reply sentence list enumerated as assumed responses to the spoken sentences, and acquiring the reply sentence list, correlated to the spoken sentence identification information of input spoken sentences, and
enumerating and displaying reply sentences contained in the reply sentence list.
